# EUROPEAN PATENT SPECIFICATION

(11) **EP 3 701 766 B1**
(45) Date of publication and mention of the grant of the patent: **06.04.2022**
(21) Application number: 18882820.6
(22) Date of filing: 26.11.2018
(51) Int. Cl.: H04W 74/08

(54) **BANDWIDTH PART OPERATION FOR RANDOM ACCESS IN RRC CONNECTED MODE**
BANDBREITENTEILBETRIEB FÜR DIREKTZUGRIFF IM RRC-VERBINDUNGSMODUS
OPÉRATION DE PARTIE DE BANDE PASSANTE D'UN ACCÈS ALÉATOIRE DANS UN MODE CONNECTÉ RRC

(30) Priority: 28.11.2017 US 201762591546 P
(43) Date of publication of application: 02.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: SHI, Cong, Dongguan Guangdong 523860 (CN); XU, Weijie, Dongguan Guangdong 523860 (CN)
(74) Representative: Rossi, Ugo
(86) International application number: PCT/CN2018/117532
(87) International publication number: WO 2019/105328

(56) References cited:
- CN-A- 107 370 589
- CN-A- 107 371 273
- CN-A- 107 396 449
- QUALCOMM INCORPORATED: "BWPs for random access in connected mode", 3GPP DRAFT; R2-1713806 BWPS FOR RANDOM ACCESS IN CONNECTED MODE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171201 17 November 2017 (2017-11-17), XP051372461, Retrieved from the Internet: URL:http://www.3gpp.org/ftp/tsg%5Fran/WG2% 5FRL2/TSGR2%5F100/Docs/ [retrieved on 2017-11-17]
- SAMSUNG: "On Bandwidth Part Operation", 3GPP DRAFT; R1-1720349 ON BANDWIDTH PART OPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 17 November 2017 (2017-11-17), XP051368968, Retrieved from the Internet: URL:http://www.3gpp.org/ftp/tsg%5Fran/WG1% 5FRL1/TSGR1%5F91/Docs/ [retrieved on 2017-11-17]
- LG ELECTRONICS MEDIATEK INTERDIGITAL ITL: "WF on Bandwidth Part for DL common channel", 3GPP DRAFT; R1-1715075 DRAFT_WF ON BANDWIDTH PART FOR DL COMMON CHANNEL TRANSMISSION_REV1.2, 3RD GENERATION PARTNERSHIP PROJECT (3GPP), MOBILE COMPETENCE CENTRE ; 650, ROUTE DES LUCIOLES ; F-06921 SOP , vol. RAN WG1, no. Prague, Czech Republic; 20170821 - 20170825 26 August 2017 (2017-08-26), XP051328563, Retrieved from the Internet: URL:http://www.3gpp.org/ftp/tsg_ran/WG1_RL 1/TSGR1_90/Docs/ [retrieved on 2017-08-26]
- HUAWEI ET AL: "BWP issues for EN-DC completion", 3GPP DRAFT; R2-1712322 BWP ISSUES FOR EN-DC COMPLETION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 17 November 2017 (2017-11-17), XP051371402, Retrieved from the Internet: URL:http://www.3gpp.org/ftp/tsg%5Fran/WG2% 5FRL2/TSGR2%5F100/Docs/ [retrieved on 2017-11-17]
- HUAWEI et al.: "Remaining issues for BWP", 3GPP TSG-RAN2 Meeting #100, R2-1712326, vol. RAN WG2, 17 November 2017 (2017-11-17), pages 1-2, XP051371406,
- LG ELECTRONICS INC et al.: "Summary of E-mail discussion on [99bis#43][NR UP/MAC] Impact of BWP", 3GPP TSG-RAN WG2 Meeting #100, R2-1713879, vol. RAN WG2, 17 November 2017 (2017-11-17), pages 9-12, XP051372515,

## Description

### TECHNICAL FIELD

The present disclosure relates generally to communication systems. More specifically, the present disclosure relates to systems and methods for initiating enhanced random access communication in the fifth generation mobile communication technology.

### BACKGROUND

The development of Mobile Internet, Internet of Things and other service applications has become a main driving force for the development of the fifth generation mobile communication technology (5G); and there is a strong demand for the 5G to for example allow optical fibers grade access rate, widespread connectivity, widespread wireless broadband access, high energy efficiency, high spectral efficiency, etc...

The 5G, as defined by the 3rd Generation Partnership Project (3GPP) International Organization for Standardization, is expected to address random access between a User Equipment (UE) and a network node in a way similar to a Long Term Evolution (LTE) system. Related technologies include:
QUALCOMM INCORPORATED: "BWPS for random access in connected mode", 3GPP DRAFT: R2-1713806 BWPS FOR RANDOM ACCESS IN CONNECTED MODE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX: FRANCE, vol. RAN WG2. no. Reno, USA: 20171201 17 November 2017 (2017-11-17), XP051372461;
SAMSUNG: "On Bandwidth Part Operation", 3GPP DRAFT; R1-1720349 ON BANDWIDTH PART OPERATION, 3RD GENERATION PARTNERSHIP PROJECT (3GPP), MOBILE COMPETENCE CENTRE; 650, ROUTE DES LUCIOLES: F-06921 SOPHIA-ANTIPOLIS CEDEX; FRANCE, vol RAN WG1, no. Reno, USA; 20171127-20171201 17 November 2017 (2017-1-17),XP051368968.
LG ELECTRONICS MEDIATEK INTERDIGITAL ITL: "WF on Bandwidth Part for DL common channel", 3GPP DRAFT; R1-1715075 DRAFT_WF ON BANDWIDTH PART FOR DL COMMON CHANNEL TRANSMISSION_REV1.2, 3RD GENERATION PARTNERSHIP PROJECT (3GPP), MOBILE COMPETENCE CENTRE; 650, ROUTE DES LUCIOLES; F-06921 SOP, vol RAN WG1, no. Prague, Czech Republic; 20170821-20170825 26 August2017 (2017-08-26), XPO51328563
HUAWEI ET AL: "BWP issues for EN-DC completion", 3GPP DRAFT; R2-1712322 BWP ISSUES FOR EN-DC COMPLETION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2. No. Reno, USA; 20171127-20171201 17 November 2017 (2017-11-17), XP051371402.

### SUMMARY

The invention is defined by the independent claims. The dependent claims specify the preferred embodiments of the invention. The following embodiments in the SUMMARY section are not according to the invention and are provided for illustrative purposes to support a better understanding of the invention.

An embodiment of this disclosure relates to a method of initiating a Random Access communication between a 5G User Equipment (UE) and a 5G network node the method comprising: if the current active UL-BWP of the UE has valid PRACH resources, the UE sending the Random Access Preamble on said current active UL-BWP; and if the current active UL- BWP of the UE has no valid PRACH resources, the UE sending the Random Access Preamble on the initial UL BWP; the method further comprising: the UE monitoring the RAR in the initial DL-BWP.

Another embodiment of this disclosure relates to a method of initiating a Random Access communication between a 5G User Equipment (UE) and a 5G network node; the method comprising: if the current active UL-BWP of the UE has valid PRACH resources, the UE sending the Random Access Preamble on said current active UL-BWP; and if the current active UL- BWP of the UE has no valid PRACH resources, the UE sending the Random Access Preamble on the initial UL BWP; the method further comprising: the UE monitoring the RAR in a default DL-BWP.

According to an embodiment of this disclosure, the default DL-BWP can be the DL-BWP with the same index as that of the current active UL-BWP. For example, if the current active UL-BWP has PRACH resources, and the ID of the current active UL BWP is 2, then the UE switches the current active DL BWP to the DL BWP with ID 2.

Another embodiment of this disclosure relates to a method of initiating a Random Access communication between a 5G User Equipment (UE) and a 5G network node; the method comprising: the UE sending the Random Access Preamble on the initial UL-BWP; and the UE monitoring the RAR in the initial DL-BWP.

Another embodiment of this disclosure relates to a method of initiating a Random Access Communication between a 5G User Equipment (UE) and a 5G network node; the method comprising:
the UE sending the Random Access Preamble on the initial UL-BWP; and the UE monitoring the RAR in a default DL-BWP.

According to an embodiment of the disclosure, the PRACH resources are defined according to a legacy 3GPP standard.

According to an embodiment of the disclosure, the method comprises the UE receiving a definition of the PRACH resources in a SIB message issued by the network node prior to sending the Random Access Preamble.

According to an embodiment of the disclosure, the method comprises the UE receiving higher layer information about the initial UL-BWP and the initial DL-BWP prior to sending the Random Access Preamble.

According to an embodiment of the disclosure, the method comprises the network node sending a Random Access Response in reply to the Random Access Preamble on the initial DL-BWP.

Embodiments of the Disclosure are also directed at apparatuses arranged, by hardware and/or by programming, to implement the methods outlined above.

### BRIEF DESCRIPTION OF THE DRAWINGS

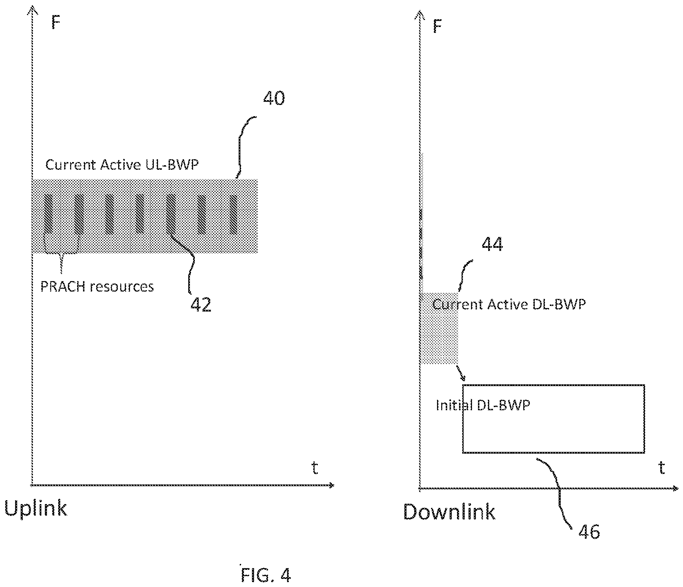

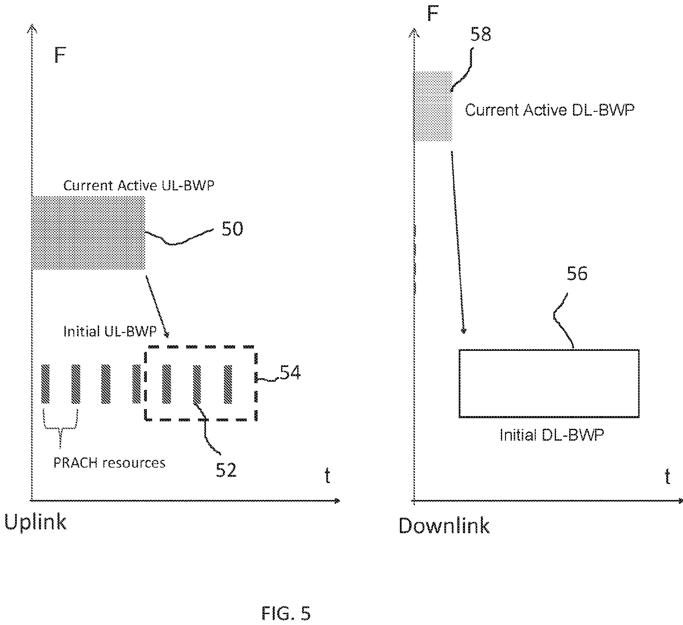

The accompanying drawings, which are incorporated in and form a part of this specification, illustrate embodiments of the invention and, together with the description, serve to explain the principles of the embodiments of the present disclosure as hereby described. Identical reference numbers represent identical features in the various figures. The figures are not drawn to scale. In the following, embodiments of the invention are described with particular reference to figures 4 and 5, and in paragraph [0061]. The other embodiments and examples of the disclosure are provided for illustrative purposes to support a better understanding of the invention.
Figure 1 illustrates a random access procedure of related art.
Figure 2 illustrates an uplink channel of related art.
Figure 3 illustrates a downlink channel of related art.
Figures 4 and 5 illustrate a method according to an embodiment of the present disclosure.
Figures 6 and 7 illustrate a method according to another embodiment of the present disclosure.
Figure 8 illustrates a method according to another embodiment of the present disclosure.
Figure 9 illustrates a method according to another embodiment of the present disclosure.

### DETAILED DESCRIPTION

The following description is presented to enable one of ordinary skill in the art to make and use the teachings of this presentation and to incorporate them in the context of particular applications. Various modifications, as well as a variety of uses in different applications will be readily apparent to those skilled in the art, and the general principles defined herein may be applied to a wide range of embodiments.

In the following detailed description, numerous specific details are set forth in order to provide a more thorough understanding of embodiments of this presentation. However, it will be apparent to one skilled in the art that such embodiments may be practiced without necessarily being limited to these specific details.

All the features disclosed in this presentation, (including any accompanying claims, abstract, and drawings) may be replaced, unless expressly stated otherwise. Thus, unless expressly stated otherwise, each feature disclosed is one example only of a generic series of equivalent or similar features.

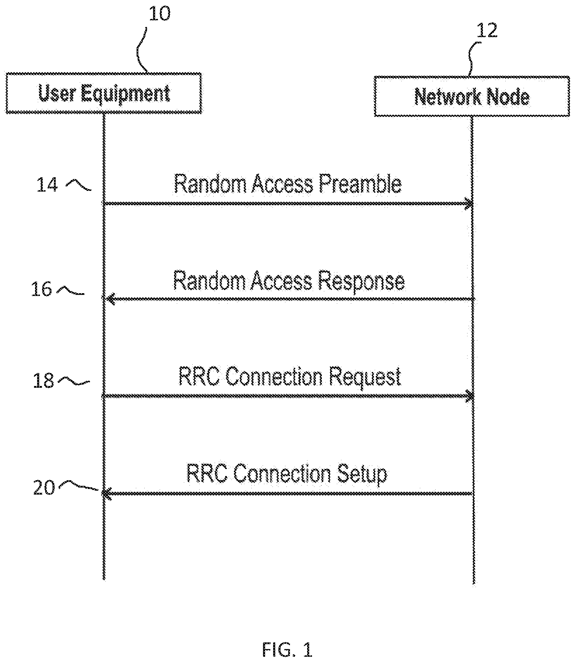

Figure 1 illustrates a random access procedure of related art. During initial access, a user equipment (UE) 10 seeks access to a network node 12 of a network (not shown) in order to register and communicate. The random access procedure serves as an uplink control procedure to enable the UE to access the network and acquire proper uplink timing (synchronize uplink). Since the initial access attempt cannot be scheduled by the network, the initial random access procedure is contention based. Collisions may occur and a contentionresolution scheme is therefore implemented. As detailed hereafter, the related art provides for first transmitting a Random Access Preamble, whose purpose is to obtain uplink synchronization, before eventually transmitting user data.

Generally, the reasons for initiating the random access procedure comprise: Initial access from RRC_IDLE; RRC Connection Re-establishment procedure; Handover; DL or UL data arrival during RRC_CONNECTED when UL synchronization status is "non-synchronized"; Transition from RRC_INACTIVE; To establish time alignment at SCell addition; Request for Other System Information (SI); and Beam failure recovery.

When the UE wants to transmit uplink data, it needs to be in RRC_CONNECTED mode, have its uplink synchronized (assigned MAC time alignment timer has not expired), and have scheduling request resources configured. If any of these requirements is not met, the UE initiates the random access procedure. The goal of the random access procedure is to acquire proper uplink timing to enable the UE to send uplink data.

Figure 1 outlines a basic random access procedure. The figures illustrate messages communicated between UE 10 and network node 12, such as an enhanced Node B or "eNB." Figure 1 illustrates a contention based random access procedure in the case of initial access. At step 14, the UE 10 sends a Random Access Preamble to the network node 12. In related art, the random access preambles are transmitted over the Physical Random Access Channel (PRACH), which is detailed hereafter, whereby the transmission of preambles is limited to certain time and frequency resources. The PRACH time and frequency resources are configured by upper layers (in the SIB-2 system information message periodically emitted by the Network Node). For Frequency Division Duplex (FDD-frame structure format 1), the PRACH frequency can currently vary from every subframe to once in every other radio frame (i.e., once in every 20 ms).

As also detailed hereafter, the PRACH resource has a bandwidth corresponding to 6 physical resource blocks. The length of the PRACH preamble in time depends on the preamble format being used. The configuration of the PRACH resources in a cell is done by RRC protocol, and the configuration is the same for all UEs in a cell.

At step 16, the network node 12 sends the UE 10 a random access response. In related art, the random access response can be sent using the Physical Downlink Shared Channel (PDSCH), as detailed hereafter. The random access response includes an uplink grant for the UE 10. At step 18, the UE 10 sends the network node an RRC Connection Request. The message is sent using the uplink resources assigned by the network node in step 16. The message requests to establish a connection at the radio resource control (RRC) layer. In related art, the RRC Connection Request can be sent on the Physical Uplink Shared Channel (PUSCH), as detailed hereafter. At step 20, the network node 12 sends the UE 10 an RRC Connection Setup message in order to establish the RRC connection. In return, the UE 10 can send a RRC connection complete message (not illustrated). It is to be noted that a RRC connection Request (in msg3) and a corresponding RRC connection complete message (in msg4) are just one of the use cases of RACH procedure when the RACH is initiated by UE switching from IDLE to CONNECTED mode. When RACH is initiated by other events, for example, when uplink syncro is not obtained, the msg3 may not include RRC connection request message.

The above protocol avoids contention by including, in the Random Access Response issued by the network node 12, an identifier derived from the Random Access Preamble, that allows UE 10 to know that the network node 12 responds to the UE 10 and not to another UE (not illustrated) that would also be awaiting for a Random Access Response.

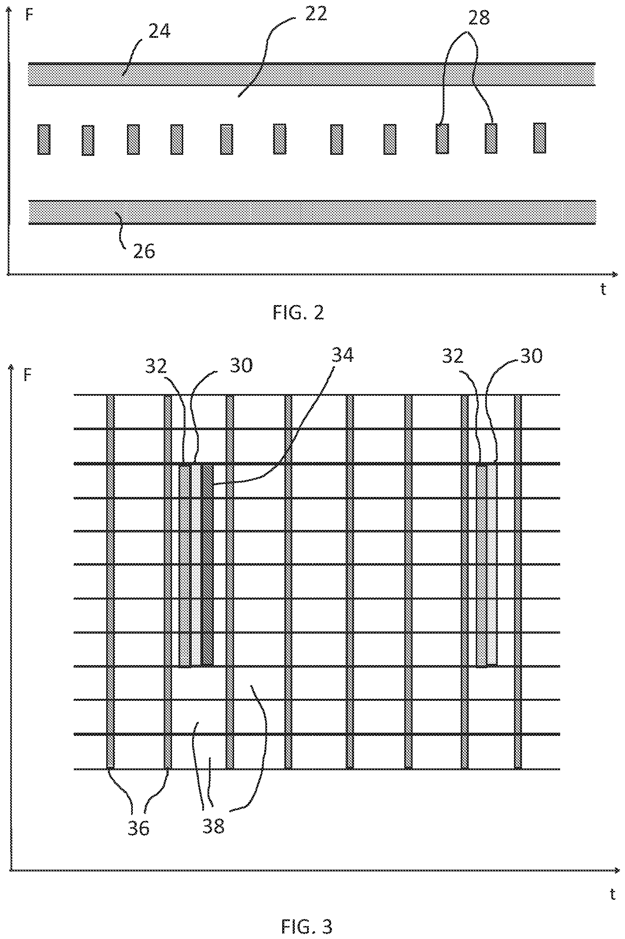

Figure 2 illustrates a uplink channel frequency map as a function of time, comprising essentially a wide Physical Uplink Shared Channel (PUSCH) 22 that occupies most of the bandwidth available for upload, and two narrow edge channels/bands 24, 26 forming together a Physical Uplink Control Channel (PUCCH). Further, narrow channels 28 forming a Physical Random Access Channel (PRACH), having a frequency height of 6 Resource Blocks (RB) each and a time length that can vary with the modulation scheme used, are periodically present at a determined location of the PUSCH 22.As outlined above, the PRACH time and frequency resources are configured in a SIB-2 message that is periodically emitted by the Network Node.

Figure 3 illustrates a downlink channel frequency map as a function of time. Figures 2 and 3 are not drawn to scale. The downlink channel comprises, repeated twice every 10 ms, a Primary Synchronization Signal (PSS)channel 30 and a Secondary Synchronization Signal (SSS) channel 32 having each a height of 6 RB. The downlink channel further comprises, repeated once every 10 ms, a Physical Broadcast Channel (PBCH) 34 having also a height of 6 RB. The PBCH broadcasts a Master Information Block (MIB) specific to the network node 12, that allows UE 10 to access a Physical Downlink Control Channel (PDCCH) 36 that is repeated every 1 ms and is essentially as high as the bandwidth available for Downlink. The remainder of the RBs that form the downlink channel form the Physical Downlink Shared Channel (PDSCH) 38, which broadcasts the data directed at the various UEs in communication with the network node. The PDCCH 36 broadcasts numerous information, in particular the SIB-2 signal that defines the PRACH as outlined above. The PDCCH 36 also contains a mapping of what RB contains data dedicated to what UE.

In addition to the above considerations, in a 5G RRC connection setup, the UE can be configured with up to four BandWidth Parts (BWP) in the downlink -with a single DownLink BandWidth Part (DL-BWP) being active at a given time- and with up to four BWP in the uplink -with a single UpLink BWP being active at a given time-. The UE is not expected to receive PDSCH, PDCCH, or CSI-RS (except for RRM) outside its active DL-BWP. The UE shall not transmit on PUSCH or PUCCH outside its active UL-BWP.

BWP selection (or BWP switching) can be done by several different ways as listed below:
By PDCCH (i.e, DCI) : A specific BWP can be activated by Bandwidth part indicator in DCI Format 1_1 (a UL Grant) and DCI Format 0_1 (a DL Schedule)
By the bwp-InactivityTimer : ServingCellConfig.bwp-InactivityTimer
By RRC signalling
By the MAC entity itself upon initiation of Random Access procedure

Using the mechanisms listed above, a specific BWP become active depending on various situations in the call processing.

The inventors have noted that, because 5G provides that the UL-BWP of a UE can be changed during the operation of the UE, it is not certain that the UL-BWP that is active at any given time has actually valid PRACH resources. It follows that, if for any reason the UE wants to initiate a Random Access Communication, at any time, it may have to change from its active UL-BWP to a UL-BWP having valid PRACH resources. The inventors have also noted that, because 5G provides that a network node that receives a Random Access Preamble does not know the configuration of the UE that has sent the Random Access Preamble, the network node has no way to know what is the active DL-BWP of the UE, and thus does not know on which DL-BWP to send the Random Access Response. A solution is for the Network Node to send the Random Access Response on all the DL-BWP for all the UEs. However, this solution leads to a low resource efficiency.

There remains a need for a method of initiating a Random Access communication in 5G that has a good resource efficiency.

An initial DL/UL BWP pair is active for a UE until the UE is explicitly (re)configured with bandwidth part(s) during or after RRC connection is established.

Further, the initial active DL/UL BWP is confined within the UE minimum bandwidth for the given frequency band.

It is noted that the activation/deactivation of the DL BWP of a UE can result from a timer instructing the UE to switch its active DL-BWP to a default DL-BWP.

It is noted that the default DL-BWP can be -or not-the initial active DL-BWP of the UE.

As outlined above, when a random access is initiated from a UE in RRC connected mode, because the UL-BWP and/or the DL-BWP of the UE may have been changed for a number of reasons, internally (e.g. as a result of a timer instruction) or externally (e.g. in response to a node instruction for facilitating data upload), it is not certain at all that the active UL-BWP of the UE actually has valid PRACH resources, and it is not known what the active DL-BWP of the UE is when a Random Access is to be initiated by the UE. Thus, as also outlined above, when a random access is initiated from a UE in RRC connected mode, when the UE sends the Preamble in its activated UL-BWP, the network actually does not know from which UE the preamble comes from, so the network node does not know how to send the random access response.

Figure 4 illustrates a method, according to an embodiment of the present disclosure, of initiating a Random Access communication between a 5G UE and a 5G network node. According to an embodiment, the PRACH resources are defined according to a legacy 3GPP standard; for example the related art illustrated in Figure 1. Thus, it can be considered that the UE 10 in Figure 1 can be a 5G UE according to an embodiment of this disclosure and that the node 12 in Figure 1 can be a 5G network node according to an embodiment of this disclosure. As outlined with respect to Figure 1, UE 10 can receive a definition of the PRACH resources in a SIB-2 message issued by the network node 12 prior to sending the Random Access Preamble.

The left portion of Figure 4 illustrates the active UL-BWP of the UE and the right portion of Figure 4 illustrates the active DL-BWP of the UE. The unused/inactive UL-BWP and DL-BWP of the UE are not illustrated for clarity. Figure 4 illustrates a case where the active UL-BWP 40 of the UE happens to have valid PRACH resources 42. According to the present embodiment of this disclosure, in such a case the UE sends the Random Access Preamble 14 on its current active UL-BWP 40. According to an embodiment of the present disclosure, the UE 12 can receive higher layer information about the initial UL-BWP and the initial DL-BWP prior to sending the Random Access Preamble. For example, initial BWP, can be determined by the frequency band on which the SSB is received (where SSB is a combined signaling block sent from network to UE including MIB, PSS, SSS outlined here above).

Further, according to this embodiment of the Disclosure, by convention the UE will monitor the Random Access Response (RAR) in its initial DL-BWP 46, whatever its current active DL-BWP 44 at the time the Random Access Preamble is sent. As outlined above in relation with Figure 1, the network node 12 is arranged for sending a Random Access Response in reply to the Random Access Preamble from UE 10. According to this embodiment of the present disclosure, the network node is accordingly programmed for, when receiving a Random Access Preamble, sending the Random Access Response on the initial DL-BWP 46 of the cell -and therefore of the UE- (the initial BWP is not necessarily the same for all the cells. However, it's the same for all the UEs in the same cell).

Figure 5 illustrates an operation of the same embodiment as in Figure 4, where the active UL-BWP 50 of the UE 10 happens to not have valid PRACH resources 52. According to the present embodiment of this disclosure, in such a case the UE 10 switches to its initial UL-BWP 54, which has the valid PRACH resources 52, and sends the Random Access Preamble 14 on initial UL-BWP 54.

As in Figure 4, according to this embodiment of the present Disclosure, the UE will monitor the Random Access Response (RAR) in its initial DL-BWP56, whatever its current active DL-BWP 58 at the time the Random Access Preamble is sent; and the network node must be programmed for sending the Random Access Response on the initial DL-BWP56.

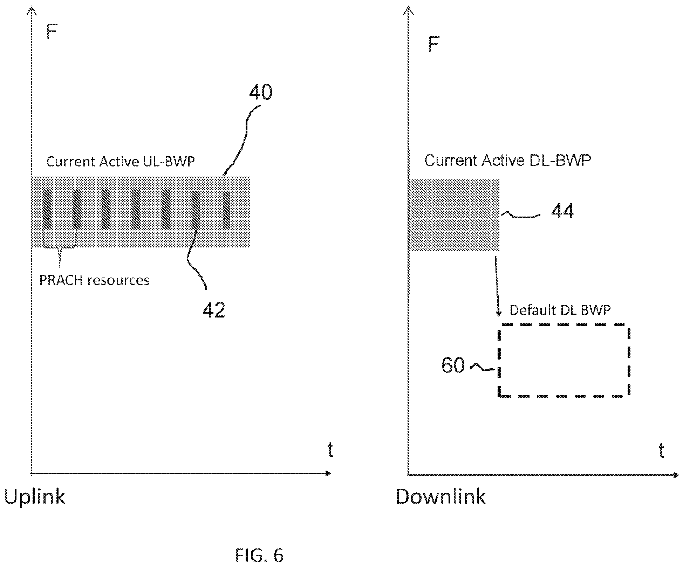

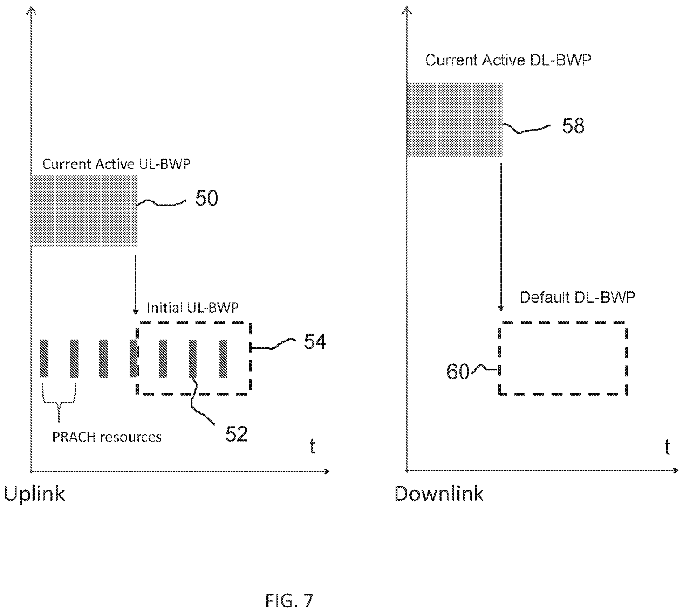

Figure 6 illustrates a method, according to a second embodiment of the present disclosure, of initiating a Random Access communication between a 5G UE 10 and a 5G network node 12. The embodiment illustrated in Figures 6 and 7 is similar to the embodiment illustrated in Figures 4 and 5, but differs in that instead of having the UE 10 arranged for monitoring the Random Access Response (RAR) in its initial DL-BWP, whatever its current active DL-BWP 44 at the time the Random Access Preamble is sent, the UE 10 is arranged for monitoring the Random Access Response (RAR) in a default DL-BWP 60. According to an embodiment of this disclosure, the default DL-BWP can be the DL-BWP with the same index as that of the current active UL-BWP. For example, if the current active UL-BWP has PRACH resources, and the ID of the current active UL BWP is 2, then the UE switches the current active DL BWP to the DL BWP with ID 2.

As outlined above in relation with Figure 1, the network node 12 is arranged for sending a Random Access Response in reply to the Random Access Preamble from UE 10. According to this embodiment of the present disclosure, the network node is accordingly programmed for, when receiving a Random Access Preamble, sending the Random Access Response on the default DL-BWP 60.

Figure 7 illustrates an operation of the same embodiment as in Figure 6, where the active UL-BWP 50 of the UE 10 happens to not have valid PRACH resources 52. According to the present embodiment of this disclosure, in such a case the UE 10 switches to its initial UL-BWP 54, which has the valid PRACH resources 52, and sends the Random Access Preamble 14 on initial UL-BWP 54.

As in Figure 6, according to this embodiment of the present Disclosure, the UE 10 will monitor the Random Access Response (RAR) in a default DL-BWP 60, whatever its current active DL-BWP 58 at the time the Random Access Preamble is sent; and the network node must be programmed for sending the Random Access Response on the default DL-BWP 60.

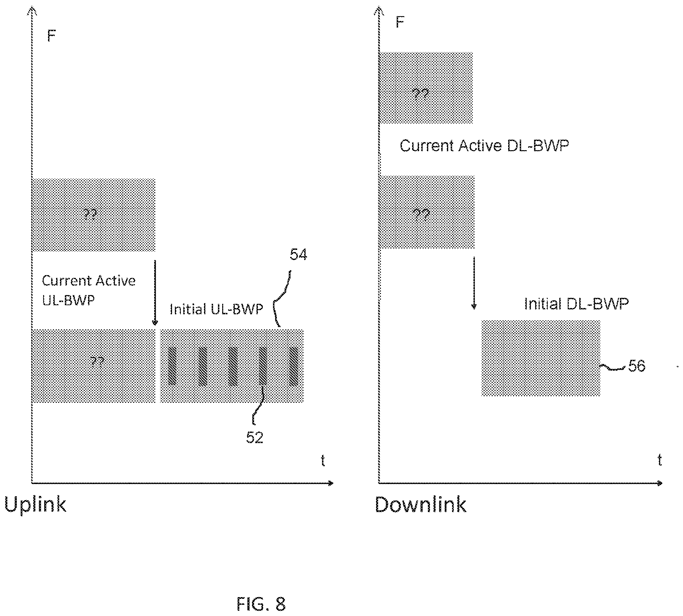

Figure 8 illustrates a method, according to a third embodiment of the present disclosure, of initiating a Random Access communication between a 5G UE 10 and a 5G network node 12. The embodiment illustrated in Figure 8 is similar to the embodiments illustrated in Figures 4/5 and 6/7, but differs essentially in that the UE 10 is arranged to switch to its initial UL-BWP 54, which has the valid PRACH resources 52, whatever its current active UL-BWP is. According to the embodiment in figure 8, as in the embodiment of Figures 4 and 5, the UE 10 is arranged for monitoring the Random Access Response (RAR) in its initial DL-BWP 56, whatever its current active DL-BWP is. In Figure 8, the references "??" indicate that it is now known which UL-BWP or DL-BWP is active, and it does not matter because the UE 10 is arranged to switch to its initial UL-BWP 54 and DL-BWP 56 whatever its current active UL-BWP and DL-BWP are.

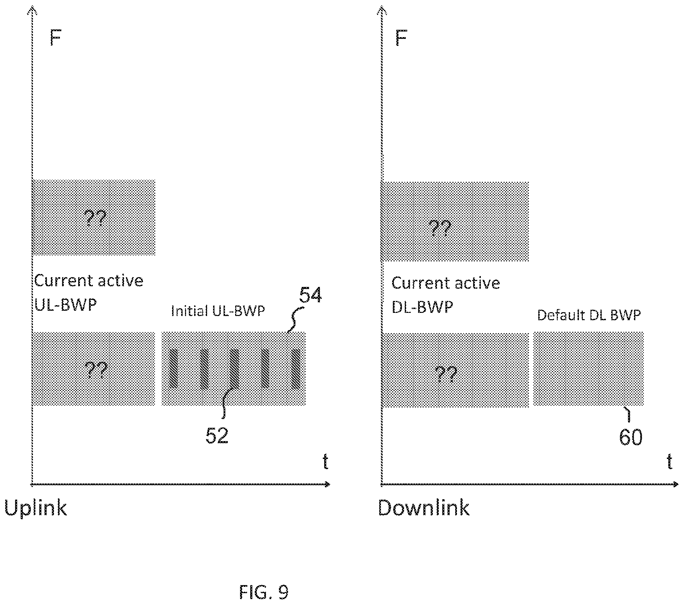

Figure 9 illustrates a method, according to a fourth embodiment of the present disclosure, of initiating a Random Access communication between a 5G UE 10 and a 5G network node 12. The embodiment illustrated in Figure 9 is similar to the embodiment illustrated in Figure 8, but differs essentially in that, as in the embodiment of Figures 6 and 7, the UE 10 is arranged for monitoring the Random Access Response (RAR) in a default DL-BWP 60, whatever its current active DL-BWP is. In Figure 9, the references "??" indicate that it is now known which UL-BWP or DL-BWP is active, and it does not matter because the UE 10 is arranged to switch to its initial UL-BWP 54 and default DL-BWP 60 whatever its current active UL-BWP and DL-BWP are.

The present disclosure also relates to apparatuses (UE, network nodes) arranged for implementing the above described methods according to embodiments of the disclosure. The apparatuses can be arranged so by using a hardware specifically made to implement said methods, or storing a program stored on a storage medium that, when run, implements said methods. The present disclosure also relates to a storage medium storing a program that, when run, implements at least one of said methods.

Having now described the invention in accordance with the requirements of the patent statutes, those skilled in this art will understand how to make changes and modifications to the present invention to meet their specific requirements or conditions. Such changes and modifications may be made without departing from the scope of the invention as disclosed herein.

The foregoing Detailed Description of exemplary and preferred embodiments is presented for purposes of illustration and disclosure in accordance with the requirements of the law. It is not intended to be exhaustive nor to limit the invention to the precise form(s) described, but only to enable others skilled in the art to understand how the invention may be suited for a particular use or implementation. No limitation is intended by the description of exemplary embodiments which may have included tolerances, feature dimensions, specific operating conditions, engineering specifications, or the like, and which may vary between implementations or with changes to the state of the art, and no limitation should be implied therefrom.

## Claims

1. A method of initiating a Random Access communication; the method comprising:
if a current active UpLink BandWidth Part, UL-BWP, of a User Equipment, UE, (10) has valid Physical Random Access Channel, PRACH, resources, the UE sending a Random Access Preamble on said current active UL-BWP; and
if the current active UL- BWP of the UE has no valid PRACH resources, the UE sending the Random Access Preamble on an initial UL-BWP;
**characterized by** the method further comprising:
the UE monitoring a Random Access Response, RAR, in an initial DownLink BandWidth Part, DL-BWP, whatever a current active DL-BWP of the UE is at a time the Random Access Preamble is sent.

2. The method of claim 1, wherein the PRACH resources are defined according to a3rd Generation Partnership Project, 3GPP, 5G standard.

3. The method of claim 1, comprising the UE receiving a definition of the PRACH resources in a System Information Block, SIB, message prior to sending the Random Access Preamble.

4. The method of claim 1, comprising the UE receiving higher layer information about the initial UL-BWP and the initial DL-BWP prior to sending the Random Access Preamble.

5. The method of claim 1, comprising the UE receiving a Random Access Response in reply to the Random Access Preamble on the initial DL-BWP.

6. A computer program comprising instructions which, when executed by a processor of a user equipment, UE, (10) cause the UE to carry out a method in accordance with any of claims 1-5.

7. A non-transitory computer-readable storage medium storing a computer program in accordance with claim 6.

8. A signal carrying a computer program in accordance with claim 6.

9. A user equipment, UE, (10) comprising: a memory and a processor, the memory storing one or more computer programs that, when executed by the processor, cause the processor to execute operations in accordance with any of claims 1-5.

## Patentansprüche

1. Verfahren zum Initiieren einer Random-Access-Kommunikation; wobei das Verfahren Folgendes umfasst:
wenn ein aktueller aktiver UpLink BandWidth Part, UL-BWP, eines Benutzergeräts, UE, (10) gültige Physical-Random-Access-Channel- bzw. PRACH-Ressourcen aufweist, Senden, durch das UE, einer Random-Access-Präambel auf dem aktuellen aktiven UL-BWP; und
wenn der aktuelle aktive UL-BWP des UE keine gültigen PRACH-Ressourcen aufweist, Senden, durch das UE, der Random-Access-Präambel auf einem Anfangs-UL-BWP;
**dadurch gekennzeichnet, dass** das Verfahren ferner Folgendes umfasst:
Überwachen, durch das UE, einer Random-Access-Antwort, RAR, in einem Anfangs-DownLink-BandWidth-Part, DL-BWP, ungeachtet eines aktuellen aktiven DL-BWP des UE zur Zeit des Sendens der Random-Access Präambel.

2. Verfahren nach Anspruch 1, wobei die PRACH-Ressourcen gemäß einem 3rd-Generation-Partnership-Project- bzw. 3GPP-5G-Standard definiert sind.

3. Verfahren nach Anspruch 1, umfassend Empfangen, durch das UE, einer Definition der PRACH-Ressourcen in einer Systeminformationsblock- bzw. SIB-Nachricht vor dem Senden der Random-Access-Präambel.

4. Verfahren nach Anspruch 1, umfassend Empfangen, durch das UE, von Informationen höherer Schicht über den Anfangs-UL-BWP und den Anfangs-DL-BWP vor dem Senden der Random-Access-Präambel.

5. Verfahren nach Anspruch 1, umfassend Empfangen, durch das UE, einer Random-Access-Antwort als Antwort auf die Random-Access-Präambel auf dem Anfangs-DL-BWP.

6. Computerprogramm, umfassend Anweisungen, die bei Ausführung durch einen Prozessor eines Benutzergeräts, UE, (10) bewirken, dass das UE ein Verfahren nach einem der Ansprüche 1-5 ausführt.

7. Nicht-flüchtiges computerlesbares Speichermedium, das ein Computerprogramm nach Anspruch 6 speichert.

8. Signal, das ein Computerprogramm nach Anspruch 6 führt.

9. Benutzergerät, UE, (10), das Folgendes umfasst:
einen Speicher und einen Prozessor, wobei der Speicher ein oder mehrere Computerprogramme speichert, die bei Ausführung durch den Prozessor bewirken, dass der Prozessor Operationen gemäß einem der Ansprüche 1-5 ausführt.

## Revendications

1. Procédé de lancement d'une communication à accès aléatoire ; le procédé comprenant :
si une partie de bande passante de liaison montante, UL-BWP, active actuelle d'un équipement utilisateur, UE, (10) dispose de ressources de canal d'accès aléatoire physique, PRACH, l'envoi par l'UE d'un préambule d'accès aléatoire sur ladite UL-BWP active actuelle ; et
si l'UL-BWP active actuelle de l'UE ne dispose pas de ressources de PRACH valides, l'envoi par l'UE du préambule d'accès aléatoire sur une UL-BWP initiale ;
**caractérisé en ce que** le procédé comprend en outre :
la surveillance par l'UE d'une réponse d'accès aléatoire, RAR, dans une partie initiale de bande passante de liaison descendante, DL-BWP, quelle que soit la DL-BWP active actuelle de l'UE au moment où le préambule d'accès aléatoire est envoyé.

2. Procédé selon la revendication 1, dans lequel les ressources PRACH sont définies selon une norme 5G 3GPP (3rd Generation Partnership Project).

3. Procédé selon la revendication 1, comprenant la réception par l'UE d'une définition des ressources de PRACH dans un message de bloc d'informations système, SIB, avant l'envoi du préambule d'accès aléatoire.

4. Procédé selon la revendication 1, comprenant la réception par l'UE d'informations de couche supérieure sur l'UL-BWP initiale et la DL-BWP initiale avant l'envoi du préambule d'accès aléatoire.

5. Procédé selon la revendication 1, comprenant la réception par l'UE d'une réponse d'accès aléatoire en réponse au préambule d'accès aléatoire sur la DL-BWP initiale.

6. Programme d'ordinateur comportant des instructions qui, à leur exécution par un processeur d'un équipement utilisateur, UE (10), amènent l'UE à réaliser un procédé selon l'une quelconque des revendications 1 à 5.

7. Support de stockage non transitoire lisible par ordinateur stockant un programme d'ordinateur selon la revendication 6.

8. Signal acheminant un programme d'ordinateur selon la revendication 6.

9. Equipement utilisateur, UE, (10) comprenant : une mémoire et un processeur, la mémoire stockant un ou plusieurs programmes d'ordinateur qui, à leur exécution par le processeur, amènent le processeur à exécuter des opérations selon l'une quelconque des revendications 1 à 5.
